(19) **Europäisches Patentamt**
**European Patent Office**
**Office européen des brevets**

(11) **EP 2 045 773 B1**

(12) **EUROPEAN PATENT SPECIFICATION**

(45) Date of publication and mention
of the grant of the patent:
**22.02.2012 Bulletin 2012/08**

(51) Int Cl.:
**G06T 3/40** (2006.01)

(21) Application number: **08100059.8**

(22) Date of filing: **03.01.2008**

(54) **Method and apparatus for changing the spatial resolution of a digital image**

Verfahren und Vorrichtung zum Wechseln der schrittweisen Auflösung eines Digitalbildes

Procédé et appareil de changement de résolution spatiale d'une image numérique

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.10.2007 US 976999 P**

(43) Date of publication of application:
**08.04.2009 Bulletin 2009/15**

(73) Proprietor: **Vestel Elektronik Sanayi ve Ticaret A.S.**
**45030 Manisa (TR)**

(72) Inventors:
• **Akgun, Toygar**
**Atlanta, Georgia 30332 (US)**
• **Sezer, Osman Gokhan**
**Atlanta, Georgia 30332 (US)**
• **Altunbasak, Yucel**
**Alpharetta, Georgia 30022 (US)**

(74) Representative: **Freeman, Avi et al**
**Beck Greener**
**Fulwood House**
**12 Fulwood Place**
**London WC1V 6HR (GB)**

(56) References cited:
**EP-A- 1 814 075     WO-A-00/48117**

• **YOAKEIM, R. AND TAUBMAN, D.: "Interpolation Specific Resolution Synthesis" PROC. IEEE INT. CONF. ON IMAGE PROCESSING, 2007, ICIP 2007, SEPT. 16-19 2007, vol. 4, 16 September 2007 (2007-09-16), pages 201-204, XP002471293**

• **AKGUN, T. AND ALTUNBASAK, Y.: "A Coupled Feature-Filter Clustering Scheme for Resolution Synthesis" PROC. IEEE INT. CONF. ON IMAGE PROCESSING, 2007, ICIP 2007, SEPT. 16-19 2007, vol. 5, 16 September 2007 (2007-09-16), pages 405-408, XP002471292**

• **FRANK M CANDOCIA ET AL: "Super-Resolution of Images Based on Local Correlations" IEEE TRANSACTIONS ON NEURAL NETWORKS, IEEE SERVICE CENTER, PISCATAWAY, NJ, US, vol. 10, no. 2, March 1999 (1999-03), XP011039280 ISSN: 1045-9227**

• **ATKINS C B: "PhD Thesis - Classification-Based Methods in Optimal Image Interpolation" PROCEEDINGS OF THE INTERNATIONAL REFRIGERATION CONFERENCE AT PURDUE: PURDUE UNIVERSITY, XX, XX, December 1998 (1998-12), pages I-IX,1, XP002387330**

• **ZHAO M ET AL: "Intra-field de-interlacing with advanced up-scaling methods" CONSUMER ELECTRONICS, 2004 IEEE INTERNATIONAL SYMPOSIUM ON READING, UK SEPT. 1-3, 2004, PISCATAWAY, NJ, USA,IEEE, 1 September 2004 (2004-09-01), pages 315-319, XP010755884 ISBN: 0-7803-8527-6**

• **ATKINS C B ET AL: "OPTIMAL IMAGE SCALING USING PIXEL CLASSIFICATION" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 3 OF 3. CONF. 8, 7 October 2001 (2001-10-07), pages 864-867, XP001110259 ISBN: 0-7803-6725-1**

EP 2 045 773 B1

**Description**

The present invention relates to a method and apparatus for changing the spatial resolution of a digital image.

The present invention relates generally to digital image scaling and resolution enhancement. The preferred embodiments allow digital images to be scaled with minimal blur and jagged edges. The techniques can be included in any system that needs to resize an input digital image or a sequence of digital images. A practical application is digital television sets where an input image needs to be displayed at a size different from (usually larger than) its original size without losing spatial detail and introducing jagged edges. Other applications include in printers where it is required to resize an input image to print it at a desired (usually greater) size, in digital cameras to allow a captured image to be viewed at a different (usually greater) resolution, and generally in digital image processing, such as of medical images, to increase the resolution of the image, etc., etc.

Various image scaling techniques are known in the prior art. Many of these are of the so-called B-spline interpolator type. The simplest of the B-spline interpolators are of the zeroth and first orders. These are known respectively as pixel replication and bilinear interpolation. In pixel replication, each pixel in the high resolution output image is obtained by taking the value of the closest pixel in the low resolution input image. In bilinear interpolation, each pixel in the high resolution output image is obtained by computing a linear combination of up to four pixels in the low resolution input image. Higher order interpolations use more sophisticated techniques, but are computationally intensive.

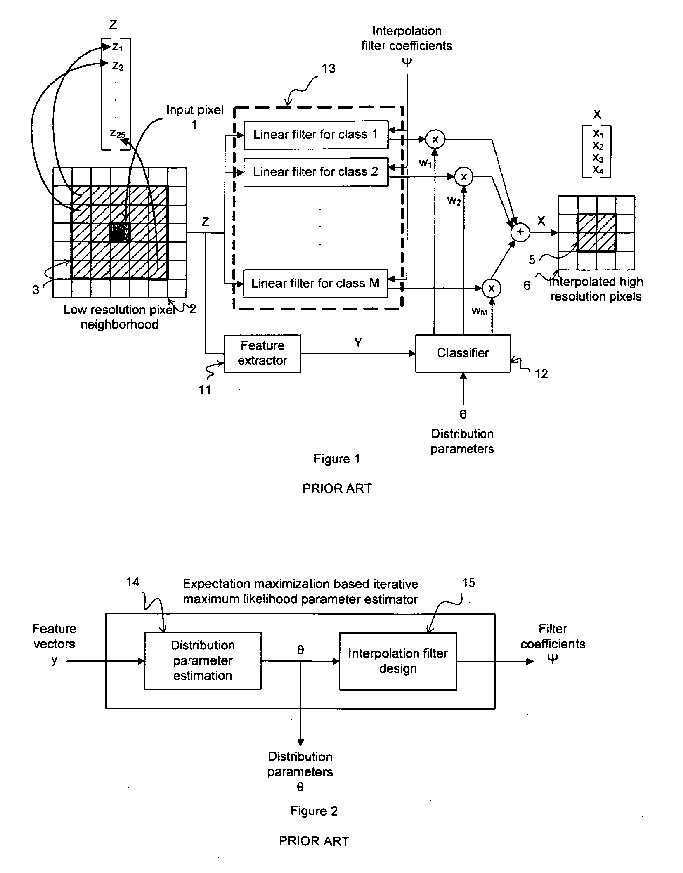

A different, classification-based approach is disclosed in "Optimal Image Scaling Using Pixel Classification" by C.B. Atkins, C.A Bouman and J.P. Allebach, in Proceedings of the 2001 International Conference on Image Processing, 7-10 October 2001, volume 3, page(s): 864 - 867 and in more detail in the PhD thesis of C.B. Atkins entitled "Classification-based Methods in Optimal Image Interpolation". Figures 1 and 2 show schematically the technique disclosed by Atkins et al.

Referring first to Figure 1, for every input pixel 1 in the low resolution input image 2, in this example a 5x5 window 3 of pixels in the low resolution input image 2 is centred on the input pixel 1. This 5x5 window is columnwise vectorised into a 25x1 column vector Z (referred to as an observation vector Z in the Atkins documents). Next, in a feature extractor block 11, a non-linear transformation projection operator f is applied to the observation vector Z to obtain a cluster vector or feature vector Y, i.e. Y=$f$(Z) for each input pixel 1. Generally speaking, Y is of lower dimension than Z. This mapping from the observation vector Z to the feature vector Y affects the quality of the final, interpolated high resolution image. A number of different projection operators, f, are possible.

The feature vector Y for each input pixel 1 is then passed to a classifier block 12 in which the feature vector Y for every input pixel 1 in the low resolution input image 2 is associated with (or "classified" or "clustered" to) a limited number of context classes. These context classes model different types of image regions in the input image 2, such as edges, smooth regions, textured regions, etc. For this purpose, distribution parameters θ are supplied to the classifier block 12, and the degree of association of the feature vector Y with the individual classes is determined inter alia in accordance with the distribution parameters θ. Atkins et al propose a statistical framework for attributing the input pixel 1 to the context classes. Context classification is performed by comparing the distance of the feature vector of the input low resolution pixel to the prototypes of the context classes. (The "prototype" of a context class is the point or vector in the context class that best represents the members of that context class.) For every input pixel 1, the classifier block 12 computes and outputs a number between 0 and 1 for each of the context classes, these numbers being weight coefficients and summing to 1. The weight coefficients given to each class by the classifier block 12 are the likelihoods that the input pixel 1 belongs to the respective classes, i.e. $w_i$ is the probability that the input pixel 1 belongs to class i. The distribution parameters θ are obtained during a training process, which will be discussed further below.

Once the feature vector Y for each input pixel 1 has been associated with the context classes, a linear filter block 13 is used to obtain the output pixels 5 of the high resolution output image 6. In particular, for every input pixel 1 of the low resolution input image 2, a 5x5 window 3 of pixels centred on the input pixel 1 is passed to the linear filter block 13. The linear filter block 13 takes as an input the weight coefficients of the context classes calculated by the classifier block 12 for the particular input pixel 1 and takes as another input interpolation filter coefficients ψ which correspond to the respective context classes, and calculates an LxL block of output pixels 5 for the high resolution output image 6 by a linear combination of the outputs of the interpolation filters in proportions according to the weight coefficients calculated by the classifier block 12 for the particular input pixel 1. (L is the scaling factor. In the example shown in Figure 1, L=2.) If this LxL window of high resolution pixels is raster-scanned into a vector X, then the interpolation can be stated as

$$X=\sum_{i=1}^{M} w_i \left( A_i Z + \beta_i \right)$$

where $A_i$ and $\beta_i$ are the interpolation matrix and bias vector of the ith context class, $w_i$ are the weight coefficients for the respective context classes/filters, and M is the number of context classes/filters. $A_i$ and $\beta_i$ together are the interpolation filter coefficients. This formula shows that the final value of an interpolated high resolution pixel is obtained as a weighted linear combination of the interpolation values computed by using the interpolation filter coefficients of all context classes. The combination weights are computed by using the parameters obtained during offline training discussed below. The weight of a context class increases as the feature vector of the input low resolution pixel gets closer to the prototype.

In short, in this prior art technique, the input pixels 1 are "classified" or associated with each of the context classes of the image to different degrees or "weights". The window X of interpolated output pixels 5 is obtained by first filtering the observation vector Z with the optimal interpolation filter coefficients $\psi$ for the individual classes and then combining the results in a mixture of proportions as determined in the classification phase. The interpolation filter coefficients $\psi$ input to the linear filter block 13 correspond to the interpolation matrix A and the bias vector $\beta$ and are again obtained during a training process, which will be discussed further below.

Clearly, of key importance in this technique are the distribution parameters $\theta$, which relate to the distribution of pixels amongst the context classes, and the interpolation filter coefficients $\psi$, which in essence determine the mixtures of the interpolating filters that are added together to obtain the output pixels 5 of the high resolution output image 6. In the Atkins documents, the distribution parameters $\theta$ and the interpolation filter coefficients $\psi$ are obtained in an offline training method, which is carried out typically on a once-only basis. In particular, high resolution images are procured and then low resolution images are obtained from the high resolution images (by one or several different techniques). Referring to Figure 2, a respective feature vector Y is obtained for each input pixel in the low resolution images. These are passed to a distribution parameter estimation block 14 in which an initial estimate of the distribution parameters $\theta$ is obtained. By making various assumptions, the values of the distribution parameters $\theta$ are updated to find a final, optimal value. In particular, maximum likelihood estimates of the distribution parameters $\theta$ are computed using an expectation-maximization algorithm. This step corresponds to "soft-clustering" the input pixels into context classes. (In this context, "hard-clustering", or using a "hard decision", means that a pixel is attributed to a single context class. On the other hand, "soft-clustering", or using a "soft decision", means that, for each pixel, a non-negative number or "weight" between 0 and 1 is assigned to each context class: the weight for each context class is the probability that the pixel concerned belongs to that context class.) Next, the coefficients of the interpolation filter $\psi$ are obtained in an interpolation filter design block 15. The estimated distribution parameters $\theta$ are input to this block 15 to compute the least-mean-squared-error optimal interpolation filters $\psi$.

In this process, as noted in the Atkins documents, one of the principal assumptions that is made is that the feature vector Y provides all of the information about an input pixel in the low resolution (training) image and how it relates to the corresponding block of pixels in the high resolution source image. Owing to this assumption, which simplifies the calculations, the estimation of the interpolation filter coefficients $\psi$ is effectively decoupled from the estimation of the distribution parameters $\theta$. This actually causes the computed interpolation filter to be sub-optimal, which in turn implies a loss of possible quality of the interpolated high resolution image.

Reference is made here to our EP-A-1814075, WO-A-2007/088113 and US-A-2007-0172152, the entire contents disclosed inter alia a method of obtaining interpolation filters and, optionally feature vectors, in which during a training phase, the interpolation filters and feature vectors are updated, which allows the interpolation filters and feature vectors to be better optimised for use in the actual interpolation phase.

YOAKEIM, R. AND TAUBMAN, D.: "Interpolation Specific Resolution Synthesis" PROC. IEEE INT. CONF. ON IMAGE PROCESSING, 2007, ICIP 2007, SEPT. 16-19 2007, vol. 4, pages 201-204, discloses an approach to resolution synthesis which is specifically matched to the interpolation problem. This is achieved by explicitly aligning classification and subsequent interpolation activities with image models conducive to interpolation. The image models are predetermined rather than discovered and represent a range of edges of arbitrary orientation, profile and position.

AKGUN, T. AND ALTUNBASAK, Y.: "A Coupled Feature-Filter Clustering Scheme for Resolution Synthesis" PROC. IEEE INT. CONF. ON IMAGE PROCESSING, 2007, ICIP 2007, SEPT. 16-19 2007, vol. 5, pages 405-408, discloses resolution synthesis involving a iterative training scheme in which the interpolation filters are coupled to the feature extraction and classification stages to improve clustering.

According to a first aspect of the present invention, there is provided a method of changing the spatial resolution of a first digital image having a first spatial resolution to provide a second digital image having a second spatial resolution that is different from the first spatial resolution, the method comprising, for each of a plurality of pixels in the first digital image obtaining a feature vector for a pixel in the first digital image; classifying said pixel so that said pixel is allocated to one or more context classes by comparing the feature vector of said pixel with a prototype of each of said context classes, each of said context classes having one or more interpolation filters associated therewith; and, filtering said pixel using the one or more interpolation filters associated with the one or more context classes to which said pixel is allocated, thereby to generate one or more pixels of the second digital image; wherein said feature vector for said pixel is a function of differences between selected adjacent pairs of pixels in the first digital image, characterised in that at least one of said adjacent pairs of pixels in the first digital image does not include said pixel.

This method of obtaining the feature vectors allows a relatively small number of context classes (e.g. around 11 or so) to be used whilst obtaining high image quality. This in turn reduces the complexity of the interpolation stage, making it easier to implement at reasonable cost in domestic or consumer equipment.

Where mention is made above of for example "the difference between pixels", it will be understood to mean the difference between values of certain components of the pixels. For example, where the input image is in the RGB format, the differences may be in the respective values of the R,G, and B components of the respective pixels. As another example, where the input image is in the YUV or YCrCb format, the differences may be in the respective values of the luminance and two chrominance components, or indeed only some of these components, such as the luminance component only.

In an embodiment, the feature vector is a function only of differences between selected adjacent pairs of pixels in the first digital image at least one of the adjacent pairs of pixels in the first digital image not including said pixel.

In an embodiment, said pairs of pixels are pixels in a window of predetermined size around said pixel. It is preferred that the window be relatively large, such as a 5x5 window around the pixel being processed. This allows the local characteristics to be captured accurately even in the presence of a small amount of aliasing. This results in classifications that are more likely to be correct or appropriate and to fewer visual artefacts.

In an embodiment, said function is such that the differences between selected adjacent pairs of pixels in the first digital image are each raised to a power n where n is an even number. This causes similar edge orientations with opposite polarities in the input image to be forced to the same context class.

In an embodiment, each element of each feature vector is a function of the difference between a selected adjacent pair of pixels in the first digital image, each feature vector being obtained by normalising the elements of said feature vector obtained thereby. This helps to suppress the effects of noise in the input image.

In an embodiment, at least one of the elements of each feature vector is a function of the difference between pairs of pixels in adjacent rows of the first digital image. This may be used effectively to measure the similarity of the even (and/or odd) lines, and/or the difference between the even and odd lines, within the window from which the feature vectors are extracted. This in turn can be used to identify pixels located in de-interlacing artefacts and thus allows the processing to take particular account of de-interlacing artefacts and thus reduce their effect on the image quality.

In an embodiment, the first digital image is in a format that has at least one luminance component and two chrominance components, wherein:

said differences between at least some of the adjacent pairs of pixels are the differences in the respective values of the luminance components of said adjacent pairs of pixels.

In an embodiment, the first digital image is initially in RGB format and is converted into said format having at least one luminance component and two chrominance components, wherein those combinations of RGB components for which isoluminant edges can occur when the RGB format image is converted into said format having at least one luminance component and two chrominance components are identified, wherein:

for at least some pixels in the first digital image that initially have RGB values corresponding to those combinations of RGB components for which isoluminant edges can occur when the RGB format image is converted into said format having at least one luminance component and two chrominance components, said differences between at least some of the adjacent pairs of said pixels are the differences in the respective values of at least one of the chrominance components of said adjacent pairs of pixels.

In an embodiment, classifying said pixel is such that said pixel is allocated to a single context class by comparing the feature vector of said pixel with a prototype of each of said context classes; and, filtering said pixel uses a single interpolation filter that is associated with said single context class to which said pixel is allocated. This "hard" classification during the interpolation phase reduces the complexity of the calculations during the interpolation phase, but can be used in the present preferred embodiment without sacrificing image quality.

In an embodiment, the second resolution is greater than the first resolution and the ratio of the first resolution to the second resolution is not an integer, and the pixels in the second digital image are obtained by, for each of said pixels in the second digital image: identifying the location in the first digital image that corresponds to the location of said pixel in the second digital image; identifying the pixel in the first digital image that corresponds to said location in the first digital image; and, filtering said pixel in the first digital image with the respective single interpolation filter that corresponds to said location in the first digital image, thereby to obtain the pixels in the second digital image. This allows non-integer scaling from one resolution to another to be achieved, in addition to integer scaling, allowing for very flexible changes from one resolution to another and avoids the limitation of some prior art of being able to achieve integer scaling ratios only, whilst retaining good image quality.

In an embodiment, the values of the elements of a feature vector for said pixel are obtained from a look-up table. This can provide a fast and efficient way of obtaining the elements of the feature vectors and avoids having to calculate the elements "from scratch".

According to a second aspect of the present invention, there is provided apparatus for changing the spatial resolution of a first digital image having a first spatial resolution to provide a second digital image having a second spatial resolution that is different from the first spatial resolution, the apparatus comprising a feature vector extractor for obtaining a feature vector for a pixel in the first digital image; a classifier for classifying said pixel so that said pixel is allocated to one or more context classes by comparing the feature vector of said pixel with a prototype of each of said context classes, each of said context classes having one or more interpolation filters associated therewith; and, a filter for filtering said pixel using the one or more interpolation filters associated with the one or more context classes to which said pixel is allocated, thereby to generate one or more pixels of the second digital image; wherein the feature vector extractor is arranged so that said feature vector for said pixel is a function of differences between selected adjacent pairs of pixels in the first digital image, characterised in that at least one of said adjacent pairs of pixels in the first digital image not include said pixel.

The preferred apparatus and/or method may be incorporated into any apparatus and/or method that is used to enhance or otherwise change the resolution of a digital image, including for example an image processor used in a television set or the like, printers, digital cameras, television broadcast capture cards, digital image processing software which may be used in many applications, etc., etc. The methods described herein may be carried out by appropriate software running on appropriate computer equipment. The software may be embedded in an integrated circuit, the integrated circuit being adapted for performing, or for use in the performance of, the relevant processes. Many of the processing steps may be carried out using software, dedicated hardware (such as ASICs), or a combination.

Embodiments of the present invention will now be described by way of example with reference to the accompanying drawings, in which:

Fig. 1 shows schematically a prior art technique for optical image scaling using pixel classification;

Fig. 2 shows schematically how distribution parameters and interpolation filter coefficients for the method of Figure 1 are obtained in the prior art;

Fig. 3 shows schematically an example of image scaling in accordance with an embodiment of the present invention;

Fig. 4 shows the spatial masks that correspond to each feature vector element for a specific example of a method of obtaining a feature vector for a pixel;

Fig. 5 shows an alternative set of masks for a specific example of a method of obtaining a feature vector for a pixel;

Fig. 6 shows schematically an example of non-integer scaling in accordance with an embodiment of the present invention;

Fig. 7 shows schematically the training phase in which the interpolation filters and context classes are obtained; and,

Fig. 8 shows schematically an example of a preferred training method.

In brief summary, the present preferred method and apparatus uses an intelligent offline training phase prior to the actual interpolation phase. The preferred offline training phase is computationally demanding but it needs to be carried out only once. The preferred interpolation phase is computationally quite simple as it can use a relatively small number of context classes and because it may require filtering with a single interpolation filter. Once the filter coefficients and the cluster prototypes of all context classes are learned from training data, these parameters are passed to an interpolation module. In the interpolation phase, a given input pixel's context is extracted by a feature extractor. The extracted feature vector is passed to a context classifier. The context classifier decides to which context class the current low resolution pixel belongs and passes the corresponding class index to a linear filter. A linear interpolation filtering block then applies the corresponding set of filter coefficients to obtain the interpolated high resolution pixels.

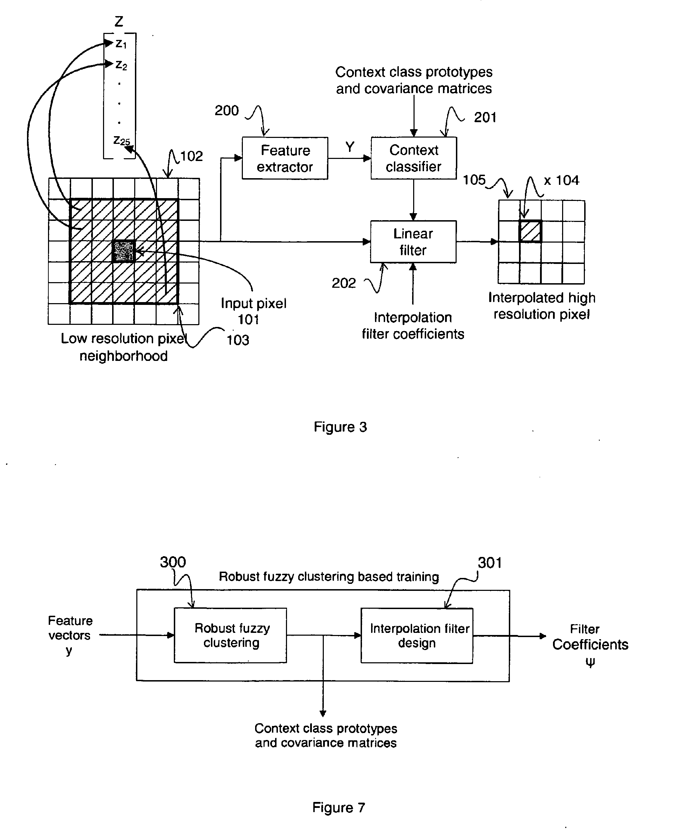

In more detail and referring initially to Figure 3, an example of an interpolation process in accordance with a preferred embodiment of the present invention is basically similar to the interpolation process of the prior art technique disclosed by Atkins et al and shown schematically in Figure 1. In particular, for every input pixel 101 in a low resolution input image 102, a 5x5 window 103 is columnwise vectorised into a 25x1 column vector Z, which may be termed an observation vector Z. In a feature extractor block 200, the observation vector Z is mapped to a feature vector Y by using a non-linear transformation projection operator f, i.e. Y=$f$(Z) for each input pixel 101. Generally speaking, Y is of lower dimension than Z. This mapping from the observation vector Z to the feature vector Y affects the quality of the final, interpolated high resolution image. A number of different projection operators f are possible.

In the present context, the preferred projection operator is such that a relatively small number of context classes can be used without (at least significantly) sacrificing the quality of the output image. In one preferred embodiment, in order to obtain the elements of the feature vector Y for the pixel 101 being processed, this is achieved by the projection operator using, principally or exclusively, first order differences between pixels, i.e. the differences in values of signal components of adjacent pairs of pixels in the window 103 of pixels around the pixel 101 being processed (in addition to or instead of differences that use the pixel 101 being processed). (The possible signal components that can be used for this purpose are discussed further below.) Using differences between pixels other than or in addition to differences between the pixel being processed and one or more of its surrounding pixels, helps to capture the dominant local edge or similar structure under slight aliasing and other signal noise. This is assisted by using a relatively large window 103 of pixels around the pixel 101 being processed, such as a 5x5 window 103. By using first order differences, difficulties with processing noisy input signals are avoided because higher order differences (i.e. differences between pixels that are not adjacent each other but that, on the contrary, are separated from each other by other pixels) are more sensitive to signal noise.

Moreover, it is preferred that similar edge orientations with opposite polarities are forced to the same cluster or context class, because the preferred interpolation process is not affected by these different polarities. For example, a perfect horizontal edge with a high-to-low transition and a perfect horizontal edge with a low-to-high transition are desirably forced to the same cluster. This can be achieved in one example by raising the first order differences to an even power. This also suppresses noisy differences since the dominant differences raised to the second or higher power effectively reduces the influence of smaller difference terms that might have been caused by negligible texture or noisy pixel values. Normalization of the elements of the feature vector Y as discussed further below also helps to suppress the effects of noisy differences.

In one specific example, the elements $Y_i$ of the feature vector Y may be obtained as follows:

$$Y_1 = (Z_7 - Z_{13})^2$$

$$Y_2 = (Z_8 - Z_{13})^2$$

$$Y_3 = (Z_9 - Z_{13})^2$$

$$Y_4 = (Z_{12} - Z_{13})^2$$

$$Y_5 = (Z_{14} - Z_{13})^2$$

$$Y_6 = (Z_{17} - Z_{13})^2$$

$$Y_7 = (Z_{18} - Z_{13})^2$$

$$Y_8 = (Z_{19} - Z_{13})^2$$

$$Y_9 = (Z_1 - Z_7)^2$$

$$Y_{10} = (Z_2 - Z_6)^2$$

$$Y_{11} = (Z_{17} - Z_{21})^2$$

$$Y_{12} = (Z_{16} - Z_{22})^2$$

$$Y_{13} = (Z_{25} - Z_{19})^2$$

$$Y_{14} = (Z_{24} - Z_{20})^2$$

$$Y_{15} = (Z_5 - Z_9)^2$$

$$Y_{16} = (Z_{10} - Z_4)^2$$

These elements $Y_1, \ldots Y_{16}$ are preferably normalized as:

$$Y_i = \frac{Y_i}{\left[\sum_{j=1}^{16} \left(Y_j\right)^2\right]^K}$$

Here, k is most preferably $0.75^{1/2}$ or 0.375. Nevertheless, higher or lower values for k can be used to control the sharpness of the interpolation process and depending on the training phase and the type of input images, where $0 < k < 1$.

As will be seen, in this example, all elements $Y_i$ of the feature vector Y are first order differences, i.e. differences between adjacent pixels, in the 5x5 window 103 of pixels around the pixel 101 currently being processed. Notably, in addition to taking differences between the pixel 101 being processed and pixels that are adjacent to that pixel 101, differences between other pairs of pixels in the window 103 are also used (in this case, to obtain the elements $Y_9$ to $Y_{16}$). It has been found that taking only the first order difference between the pixel 101 and its immediate neighbours as feature vectors can fail to represent accurately the 2D structure of the image surrounding the pixel 101. Therefore, the occurrence of intensity peaks, troughs or saddles around the pixel 101 can only be properly detected if differences between other pairs of pixels in the window 103, such as differences that are orthogonal to the standard centre-surround differences, are added to the feature set. Moreover, differences between adjacent pixels in the corners of the window 103 are also used in this example in order to obtain a better representation of the image structure. All of the differences are squared so that similar edge orientations with opposite polarities are forced to the same context class. The elements initially obtained are then normalised to find the final values for the elements of the feature vector Y for the pixel 101 being processed.

In a second, extended example, the elements $Y_i$ of the feature vector Y are obtained as follows:

$$Y_1 = (Z_7 - Z_{13})^2$$

$$Y_2 = (Z_8 - Z_{13})^2$$

$$Y_3 = (Z_9 - Z_{13})^2$$

$$Y_4 = (Z_{12} - Z_{13})^2$$

$$Y_5 = (Z_{14} - Z_{13})^2$$

7

$$Y_6 = (Z_{17}-Z_{13})^2$$

$$Y_7 = (Z_{18}-Z_{13})^2$$

$$Y_8 = (Z_{19}-Z_{13})^2$$

$$Y_9 = (Z_1-Z_7)^2$$

$$Y_{10} = (Z_2-Z_6)^2$$

$$Y_{11} = (Z_{17}-Z_{21})^2$$

$$Y_{12} = (Z_{16}-Z_{22})^2$$

$$Y_{13} = (Z_{25}-Z_{19})^2$$

$$Y_{14} = (Z_{24}-Z_{20})^2$$

$$Y_{15} = (Z_5-Z_9)^2$$

$$Y_{16} = (Z_{10}-Z_4)^2$$

$$Y_{17} = (Z_8-Z_{12})^2$$

$$Y_{18} = (Z_{12}-Z_{18})^2$$

$$Y_{19} = (Z_{18}-Z_{14})^2$$

$$Y_{20} = (Z_{14}-Z_8)^2$$

$$Y_{21} = (Z_1 + 2*Z_6 + 4*Z_{11}+2*Z_{16}+Z_{21}-Z_2-2*Z_7-4*Z_{12}-2*Z_{17}-Z_{22})^2$$

$$Y_{22} = (Z_4 + 2*Z_9 + 4*Z_{14}+2*Z_{19}+Z_{24}-Z_5-2*Z_{10}-4*Z_{15}-2*Z_{20}-Z_{25})^2$$

$$Y_{23} = (Z_2 + 2*Z_7 + 4*Z_{12}+2*Z_{17}+Z_{22}-Z_3-2*Z_8-4*Z_{13}-2*Z_{18}-Z_{23})^2$$

$$Y_{24} = (Z_3 + 2*Z_8 + 4*Z_{13} + 2*Z_{18} + Z_{23} - Z_4 - 2*Z_9 - 4*Z_{14} - 2*Z_{19} - Z_{24})^2$$

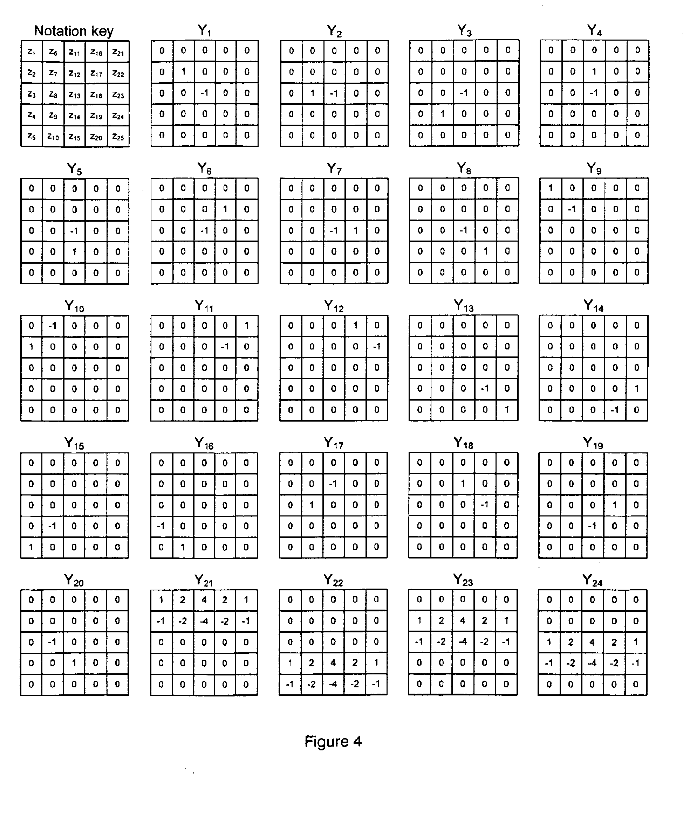

Figure 4 shows the spatial masks that correspond to each feature vector element for this example. The feature vector elements, $Y_i$ for i=1, ... 24, are normalized as:

$$Y_i = \frac{Y_i}{\left[ \sum_{j=1}^{24} (Y_j)^2 \right]^K}$$

where k may be for example 0.75 or 0.375.

In this example, additional feature vector entries are also included in the final feature vector to build robustness against certain undesired compression or de-interlacing artefacts. For example, feature vector entries that measure the similarity of the even (and/or odd) lines, and/or the difference between the even and odd lines, within the window 103 from which the feature vectors are extracted, can be used to identify pixels located in de-interlacing artefacts. It is advantageous to detect such pixels and avoid using resolution-enhancing filters which would simply enhance the frequency content of an artefact region and make it even more visible. Given that the current trend is towards television images being transmitted in progressive format and that such images are often obtained from interlaced original television images, it is a fact that the transmitted progressive format images often contain undesirable de-interlacing artefacts.

Thus, in the second specific example given above, the last four elements $Y_{21}$ to $Y_{24}$ are designed to be sensitive to de-interlacing artefacts which are characterized by alternating lines. In particular, differences between pairs of adjacent pixels in adjacent rows in the input image 102 are used so that the feature vector Y can accommodate de-interlacing artefacts better. By effectively discriminating de-interlacing artefacts, the amplification of de-interlacing artefacts can be avoided and, indeed, de-interlacing artefacts can even be suppressed. This is assisted by also using proper training samples in the training data as discussed further below. For example, if the training phase is supplied with low-resolution frames with de-interlacing artefacts (obtained for example by blurring and downsampling high resolution interlaced video that is in turn obtained from original progressive high resolution content) and the corresponding high resolution progressive frames, the method can be better trained to suppress de-interlacing artefacts. (It will be understood that the coefficients 1, 2 and 4 used in the last four elements of this example can be varied.)

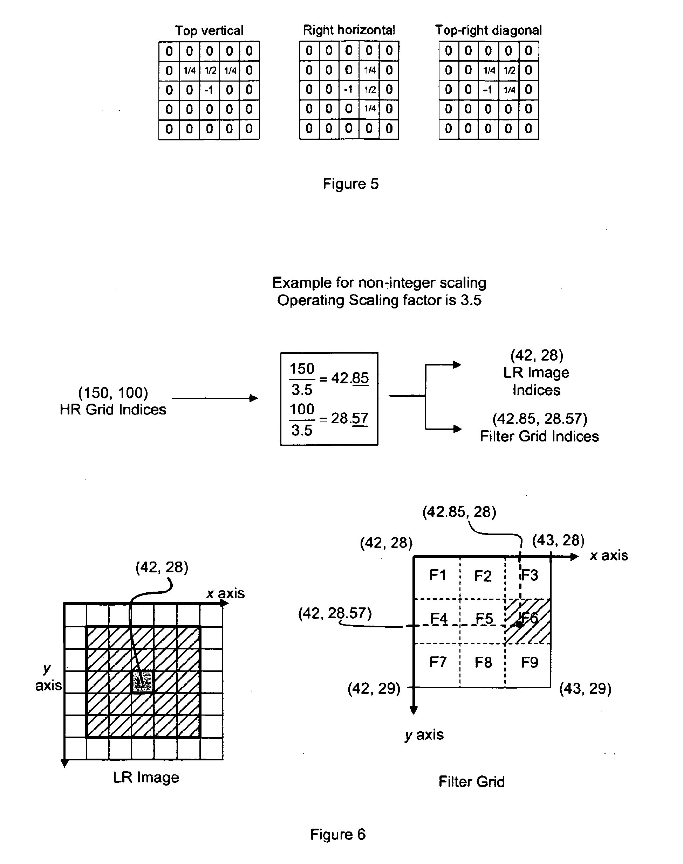

It should be noted that different difference masks to obtain the first order differences can be used. For example, an alternative set of masks to obtain noise-robust averaged horizontal, vertical and diagonal differences are shown in Figure 5. Corresponding feature vector entries are given as:

$$Y = (0.25 \ Z_7 + 0.5 \ Z_{12} + 0.25 \ Z_{17} - Z_{13})^2$$

$$Y = (0.25 \ Z_{17} + 0.5 \ Z_{18} + 0.25 \ Z_{19} - Z_{13})^2$$

$$Y = (0.25 \ Z_{12} + 0.5 \ Z_{17} + 0.25 \ Z_{18} - Z_{13})^2$$

Other directional differences can be modified in a similar fashion. Again, it will be understood that the weighting scheme (here, 0.25, 0.5, 0.25) can also be designed to custom-fit certain characteristics of the input signal.

It will be understood that taking the second power is not the only way of achieving the goal of forcing similar edge orientations with opposite polarities to the same cluster or context class. For example, it is possible to use absolute values combined with a look-up table mapping designed to mimic a power rule to achieve the same goal (or any other non-linear mapping that would effectively achieve the same goal). The LUT table can be extended to also include the normalization step. Indeed, a look-up table may be used throughout in order to avoid having to calculate the various values of the elements of the feature vector Y on-the-fly. A thresholding operation can be performed immediately after obtaining differences as an additional counter measure against noise.

In addition, the feature vectors obtained as first order differences can be processed in preferred ways prior to the normalization step given above. One possible processing step that can be included in the feature extraction path is mean removal. To perform mean removal, the mean value of the feature vector elements is computed by summing all feature vector elements (for example, $Y_1$ to $Y_{24}$ in the second example given above) and dividing by the length of the feature vector. The resulting mean value is subtracted from all feature vector elements one by one to obtain the mean-removed feature vector.

In the case of colour input signals that are in the RGB format, the feature extraction step can be performed on each of the R, G and B components separately. In other words, where mention is made above of for example "the difference between pixels", in this case, this will be understood to mean "the difference *in the respective values of the R,G, and B components of the respective* pixels".

In the case of colour input signals that are transformed from RGB to YUV (or YCbCr), the feature extraction step can be performed on the luminance components only. In other words, where mention is made above of for example "the difference between pixels", in this case, this will be understood to mean "the difference *in the luminance values of the respective* pixels". Using only the luminance components reduces computational complexity but with virtually no loss of visual quality in the final output image. There is one peculiarity that is preferably addressed explicitly in such a case, namely isoluminant edges, i.e. colour edges for which the luminance component does not have an edge. Such edges do not occur frequently, and the presence of such an edge does not necessarily imply a visually disturbing artefact. The only shortcoming of simply ignoring such edges is reduced edge definition, which results in a blurred transition. One way of solving this issue is to deduce beforehand the RGB colour components for which isoluminant edges can occur for the specific colour space transformation used in the video pipeline. Once the specific RGB values that lead to isoluminant edges are identified, for these RGB values the feature extraction step can be performed on one or both of the chrominance components (i.e. the UV or the CbCr components here).

Referring again to Figure 3, having obtained the feature vector Y for the pixel 101 being processed, or having obtained the respective feature vectors Y for all of the pixels in the original input image 102, the or each feature vector Y is passed to a context classifier 201. Here, the feature vector Y of every pixel in the input image 102 is used to classify each input low resolution pixel as a member of a limited number of context classes. These classes model different image regions like edges, smooth and textured regions. There is a different set of interpolation filter coefficients for every context, the coefficients being fine-tuned to the spatial characteristics of that context.

In this example, context classification is performed by comparing the feature vector of the current pixel 101 to the prototypes of the context classes. In one example, this comparison is based on a weighted Euclidian distance. The class whose prototype gives the shortest distance to the current feature vector is declared as the context class of the current pixel 101. It will be noted that this context classification is *hard*, that is, each feature vector is classified to a single context class.

The output of the context classifier 201 is passed to a linear interpolation filter 202. As the present context classification is *hard*, only a single interpolation filter is used for each pixel 101 of the input image 102. The linear interpolation filter block uses a 5x5 window centred at the input low resolution pixel 101 to interpolate a single pixel x 104 of the output high resolution image 105 as

$$x = AZ$$

where Z is as defined above and A is the interpolation filter optimized for the context class of the current pixel 101.

The interpolation step can also involve an additional bias term $\beta$ such that:

$$x = AZ + \beta$$

In experiments, it has been observed that dropping the additional bias term results in a negligible visual quality loss while providing substantial computational savings. However, in a setting where visual quality is of utmost importance, the bias term can be included to maximize the quality of the interpolation result.

It may be noted that unlike prior art schemes, such as those disclosed in the Atkins documents mentioned above, the present preferred method interpolates output pixels one at a time. This renders non-integer scaling ratios possible with the present method. Referring to Figure 6, there is shown an example of non-integer scaling from a low resolution (LR) image to a high resolution image in which, by way of example only and without limitation, a scaling ratio of 3.5 is used. Consider first the high resolution pixel at image coordinate (150,100) in the high resolution image. This high resolution pixel maps to the Cartesian coordinate (42.85,28.57) in the low resolution image. The corresponding actual low resolution pixel is located at image coordinate (42,28) in the low resolution image. Thus, in order to attain a one-to-many mapping between low and high resolution images, the low resolution pixel is (notionally) divided into a grid. This division can be done in various ways. For illustration, a 3x3 filter grid of nine grid partitions is shown in Figure 6. For each partition, a respective filter F1 to F9 is assigned, the filters F1 to F9 being obtained in a training phase (discussed further below). For each pixel in the high resolution image, its corresponding location or projection in the low resolution image is identified, and the corresponding filter F1-F9 of the relevant partition in the low resolution image is used and applied to the corresponding low resolution pixel in order to construct the high resolution pixel in the high resolution image. Of course, the same strategy can be employed for integer scaling ratios to increase the resolution. It will be appreciated that a 3x3 filter grid is used in this example because the desired scaling ratio of 3.5 is close to 3. Different filter grids, with a corresponding different number of filters $F_n$, can be used for different scaling ratios in a corresponding manner.

In summary, in the interpolation phase of the preferred embodiment, use is made of first order differences between pixels in the input image 102, i.e. use is made of the differences in values of signal components of adjacent pairs of pixels in the window 103 of pixels around the pixel 101 being processed (in addition to or instead of differences that use the pixel 101 being processed). Using differences between pixels other than or in addition to differences between the pixel being processed and one or more of its surrounding pixels helps to capture the dominant local edge or similar structure under slight aliasing and other signal noise. This allows high image quality to be obtained whilst using only a relatively small number of context classes. This is significant given that this interpolation phase is carried out at the receiver side in for example a television signal transmission scheme, or is typically carried out in other consumer-type equipments, such as a printer or digital camera or the like, as it allows high image quality to be obtained at relatively low cost. Moreover, the preferred embodiment allows non-integer scaling ratios from one resolution to another to be achieved in a computationally efficient manner and without any significant loss of image quality.

The training phase in which the interpolation filters and context classes are obtained is shown schematically in Figure 7. As in the prior art, a number of high resolution source images are procured and corresponding low resolution images are obtained from the high resolution images, by appropriate downsampling and/or downscaling, etc., to obtain training images. Feature vectors Y are then obtained from the training images, preferably using the same projection operator for obtaining the elements $Y_i$ of the feature vector Y as will be used in the interpolation phase (see above). Then in block 300, clustering with respect to the feature vectors Y is carried out, i.e. the context class(es) closest to the current feature vector is (are) obtained.

In the preferred training method, to be able to start the training iterations, a set of initial values for the interpolation filter coefficients is required. There are many different strategies for initialising the interpolation filter coefficients. It is a well-known fact that for iterative algorithms, such as the preferred training method, the initial conditions affect the convergence rate and the final results. Thus, it is important to choose the initial filter coefficients wisely. In a preferred embodiment, a single non-directional Gaussian shaped filter and several directional Gaussian filters are used to initialise the filter coefficients. The Gaussian filters are obtained from the standard two-dimensional Gaussian kernel:

$$f(x,y) = \frac{1}{2\pi\sigma_X\sigma_Y\sqrt{1-\rho^2}}\exp\left[-\frac{1}{2(1-\rho^2)}\left(\frac{(x-m_X)^2}{\sigma_X^2} - \frac{2\rho(x-m_X)(y-m_Y)}{\sigma_X\sigma_Y} - \frac{(y-m_Y)^2}{\sigma_Y^2}\right)\right]$$

and can be warped to have the desired edge orientation by adjusting the correlation coefficient $\rho$ and the standard deviations $\sigma_X$, $\sigma_Y$. Other methods for choosing the initial filter coefficients are possible.

In the preferred embodiment, robust fuzzy clustering with a modified cost function is used. This allows constraints to be imposed easily on the cluster sizes and shapes. Also, additional constraints to handle noisy feature vectors and outliers can be introduced.

One preferred cost function is:

$$J = \sum_{i=1}^{M}\sum_{k=1}^{N}(u_{ik})^m d^2(y_k,p_i) + \sum_{i=1}^{M}\eta_i\sum_{k=1}^{N}(1-u_{ik})^m$$

where

M is the number of context classes,
N is the number of training pixels (and hence the number of feature vectors),
$u_{ik}$ is the degree of membership of the kth feature vector to the ith context class,

$$d^2(y_k,p_i)=\rho_i^{1/r}\left|C_i\right|^{1/r}(y_k-m_i)^T C_i^{-1}(y_k-m_i)$$ is the distance metric,

$\rho_i$ is the parameter that controls the size of the ith class,
r is the dimension of the feature vectors,
$m_i$ is the mean feature vector of the ith class,
$C_i$ is the covariance matrix of the ith class,
$\eta_i$ is a parameter that controls the association of outliers and noisy samples to the ith class, and
m is the fuzzification parameter that controls the fuzziness of the clustering.

The fuzzy clustering is achieved by minimizing the cost function J over all fuzzy partitions. The resulting memberships for all feature vectors are used for the filter derivation. It will be understood that classification during filtering can be fuzzy or hard. It will also be understood that fuzzy clustering methods include hard clustering methods such as k-means as a special case (in the limiting case as $m \rightarrow 1$). In certain settings, it may be advantageous to train the proposed method with hard k-means clustering method.

Other cost functions than that shown above may be tailored for different characteristics of the input images. For example, different clusters shapes and sizes can be imposed by properly designing the distance metric $d^2(y_k,p_i)$.

Additional terms, such as $\sum_{i=1}^{M}\eta_i\sum_{k=1}^{N}(1-u_{ik})^m$, can be included to increase robustness against noise and outliers. In

this specific term, $\eta_i$ represents a class-specific fixed distance. Whilst the first component of the cost function J as given above is designed to find memberships that minimize the weighted sum of distances of all feature vectors to class prototypes (where the weights are the class memberships), the additional term is designed for the feature vectors that have small memberships to all classes, i.e. the feature vectors that are far away from all class prototypes. Since these feature vectors are likely to be outliers or very noisy samples, they are effectively "assigned" to a noise class, and their negative influence on the updated class prototypes is suppressed.

Block 301 represents the phase where the interpolation filters are obtained. For every cluster obtained in the clustering block 300, the weighted least squared error (LSE) interpolation filter is computed. While solving for the LSE filter, the memberships of the pixels are used as weights.

In this way, the context classes, and their prototypes, and the interpolation filter coefficients, are obtained for use in the interpolation phase discussed above.

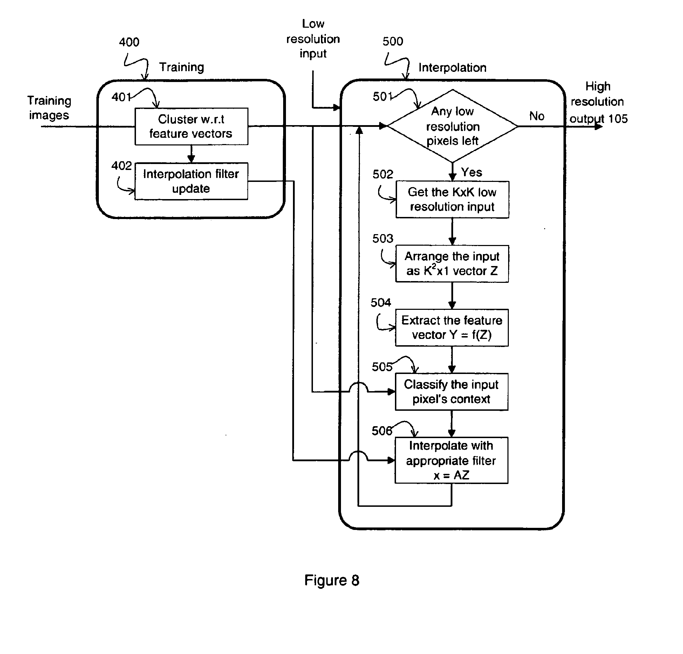

In short, therefore, and referring to the schematic flow diagram of Figure 8, in the preferred training method, first an offline training stage 400 is carried out. All the low-high resolution pixel neighbourhoods extracted from the available training images are input to the training. At step 401, clustering with respect to feature vectors is carried out. Clustering is based on robust fuzzy clustering techniques. Then, at step 402, the interpolation filters are computed. For every cluster obtained in step 401, the weighted least squared error (LSE) interpolation filter is computed. While solving for the LSE filter, the memberships of the pixels are used as weights.

Stage 500 is the interpolation stage. In step 501, a condition check for terminating the interpolation stage is carried out to check that there are still low resolution pixels to be processed. The interpolation filters are applied to all low resolution pixels in raster scan order.

Step 502 is the first step in interpolation. A KxK low resolution window centred at the current low resolution pixel to be filtered is extracted. (In the specific examples above, K=5.) In step 503, the KxK pixels are rearranged into a $K^2$x1 column vector Z. In step 504, for every input low resolution pixel, a feature vector Y is obtained from the column vector Z where:

$$Y = f(Z)$$

Feature vector extraction is a mapping from Z to Y, which is usually of lower dimensionality. The preferred feature vector affects the quality of the interpolated high resolution image. Hence feature vector selection is an important part of the method, as described in more detail above.

In step 505, the feature vector of every low resolution input pixel is used to classify the input low resolution pixel as a member of a limited number of context classes, weighting the classes as discussed above. Again, these classes model different image regions, like edges, smooth regions, textured regions, etc. There is a different set of interpolation filter coefficients for every context, these being fine tuned to the special characteristics of that context, and being obtained in the off-line training method discussed above.

Then, in step 506, linear interpolation takes place as discussed above. In this example, a 5x5 window is centred at the input low resolution pixel to interpolate a high resolution pixel 104, called x, as:

$$x = AZ$$

where A is the interpolation filter.

Flow then returns to the condition check step 501. Ultimately, when no low resolution pixels are left, the high resolution output image 105 is obtained.

Embodiments of the present invention have been described with particular reference to the examples illustrated. However, it will be appreciated that variations and modifications may be made to the examples described within the scope of the present invention as defined by the appended claims.

**Claims**

1. A method of changing the spatial resolution of a first digital image (102) having a first spatial resolution to provide a second digital image (105) having a second spatial resolution that is different from the first spatial resolution, the method comprising, for each of a plurality of pixels in the first digital image:

   obtaining a feature vector (Y) for a pixel (101) in the first digital image (102);
   classifying said pixel (101) so that said pixel is allocated to one or more context classes by comparing the feature vector (Y) of said pixel with a prototype of each of said context classes, each of said context classes having one or more interpolation filters (202) associated therewith; and,
   filtering said pixel (101) using the one or more interpolation filters (202) associated with the one or more context classes to which said pixel is allocated, thereby to generate one or more pixels (104) of the second digital image (105) ;
   wherein said feature vector (Y) for said pixel (101) is a function of differences between selected adjacent pairs of pixels in the first digital image (102), **characterised in that**,
   at least one of said adjacent pairs of pixels in the first digital image (102) does not include said pixel (101).

2. A method according to claim 1, wherein the feature vector (Y) is a function only of differences between selected adjacent pairs of pixels in the first digital image (102), at least one of the adjacent pairs of pixels in the first digital image (102) not including said pixel (101).

3. A method according to claim 1 or claim 2, wherein said pairs of pixels are pixels in a window (103) of predetermined size around said pixel (101).

4. A method according to any of claims 1 to 3, wherein said function is such that the differences between selected adjacent pairs of pixels in the first digital image (102) are each raised to a power n where n is an even number.

5. A method according to any of claims 1 to 4, wherein each element of each feature vector (Y) is a function of the difference between a selected adjacent pair of pixels in the first digital image (102), each feature vector being obtained by normalising the elements of said feature vector obtained thereby.

6. A method according to any of claims 1 to 5, wherein at least one of the elements of each feature vector (Y) is a function of the difference between pairs of pixels in adjacent rows of the first digital image (102).

7. A method according to any of claims 1 to 6, wherein the first digital image (102) is in a format that has at least one luminance component and two chrominance components, wherein:

   said differences between at least some of the adjacent pairs of pixels are the differences in the respective values of the luminance components of said adjacent pairs of pixels.

8. A method according to claim 7, wherein the first digital image (102) is initially in RGB format and is converted into said format having at least one luminance component and two chrominance components, wherein those combinations of RGB components for which isoluminant edges can occur when the RGB format image is converted into said format having at least one luminance component and two chrominance components are identified, wherein:

for at least some pixels in the first digital image (102) that initially have RGB values corresponding to those combinations of RGB components for which isoluminant edges can occur when the RGB format image is converted into said format having at least one luminance component and two chrominance components, said differences between at least some of the adjacent pairs of said pixels are the differences in the respective values of at least one of the chrominance components of said adjacent pairs of pixels.

9. A method according to any of claims 1 to 8, wherein:

classifying said pixel (101) is such that said pixel is allocated to a single context class by comparing the feature vector (Y) of said pixel with a prototype of each of said context classes; and, filtering said pixel uses a single interpolation filter (202) that is associated with said single context class to which said pixel is allocated.

10. A method according to claim 9, wherein the second resolution is greater than the first resolution and the ratio of the first resolution to the second resolution is not an integer, the pixels (104) in the second digital image (105) being obtained by, for each of said pixels in the second digital image (105):

identifying the location in the first digital image that corresponds to the location of said pixel in the second digital image (104); identifying the pixel in the first digital image (102) that corresponds to said location in the first digital image (102); and, filtering said pixel in the first digital image with the respective single interpolation filter (202) that corresponds to said location in the first digital image (102), thereby to obtain the pixels in the second digital image (104).

11. A method according to any of claims 1 to 10, wherein the values of the elements of a feature vector (Y) for said pixel are obtained from a look-up table.

12. Apparatus for changing the spatial resolution of a first digital image (102) having a first spatial resolution to provide a second digital image (105) having a second spatial resolution that is different from the first spatial resolution, the apparatus comprising:

a feature vector extractor (200) for obtaining a feature vector (Y) for a pixel (101) in the first digital image (102); a classifier (201) for classifying said pixel (101) so that said pixel is allocated to one or more context classes by comparing the feature vector (Y) of said pixel with a prototype of each of said context classes, each of said context classes having one or more interpolation filters associated therewith; and, a filter (202) for filtering said pixel using the one or more interpolation filters (202) associated with the one or more context classes to which said pixel is allocated, thereby to generate one or more pixels (104) of the second digital image (105); wherein the feature vector extractor (200) is arranged so that said feature vector (Y) for said pixel (101) is a function of differences between selected adjacent pairs of pixels in the first digital image (102), **characterised in that**, at least one of said adjacent pairs of pixels in the first digital image (102) does not include said pixel (101).

13. Apparatus according to claim 12, wherein the feature vector extractor (200) is arranged so that the feature vector (Y) is a function only of differences between selected adjacent pairs of pixels in the first digital image (102), at least one of the adjacent pairs of pixels in the first digital image not including said pixel (101).

14. Apparatus according to claim 12 or claim 13, wherein the feature vector extractor (200) is arranged so that said pairs of pixels are pixels in a window (103) of predetermined size around said pixel.

15. Apparatus according to any of claims 12 to 14, wherein the feature vector extractor (200) is arranged so that said function is such that the differences between selected adjacent pairs of pixels in the first digital image (102) are each raised to a power n where n is an even number.

16. Apparatus according to any of claims 12 to 15, wherein the feature vector extractor (200) is arranged so that each element of each feature vector (Y) is a function of the difference between a selected adjacent pair of pixels in the first digital image (102) and each feature vector (Y) is obtained by normalising the elements of said feature vector obtained thereby.

17. Apparatus according to any of claims 12 to 16, wherein the feature vector extractor (200) is arranged so that at least one of the elements of each feature vector (Y) is a function of the difference between pairs of pixels in adjacent rows of the first digital image (102).

18. Apparatus according to any of claims 12 to 17, wherein the apparatus is arranged to operate on a first digital image (102) that is in a format that has at least one luminance component and two chrominance components, the feature vector extractor (200) being arranged so that said differences between at least some of the adjacent pairs of pixels are the differences in the respective values of the luminance components of said adjacent pairs of pixels.

19. Apparatus according to claim 18, wherein the apparatus is arranged to operate on a first digital image (102) that is initially in RGB format and is converted into said format having at least one luminance component and two chrominance components, wherein those combinations of RGB components for which isoluminant edges can occur when the RGB format image is converted into said format having at least one luminance component and two chrominance components have been identified, wherein:

the feature vector extractor (200) is arranged so that for at least some pixels in the first digital image (102) that initially have RGB values corresponding to those combinations of RGB components for which isoluminant edges can occur when the RGB format image is converted into said format having at least one luminance component and two chrominance components, said differences between at least some of the adjacent pairs of said pixels are the differences in the respective values of at least one of the chrominance components of said adjacent pairs of pixels.

20. Apparatus according to any of claims 12 to 19, wherein:

the classifier (201) is arranged so that said pixel (101) is allocated to a single context class by comparing the feature vector (Y) of said pixel (101) with a prototype of each of said context classes; and, the filter (202) is arranged to filter said pixel (101) using a single interpolation filter that is associated with said single context class to which said pixel is allocated.

21. Apparatus according to claim 20, wherein the second resolution is greater than the first resolution and the ratio of the first resolution to the second resolution is not an integer, the apparatus being arranged to obtain the pixels in the second digital image (105) by, for each of said pixels in the second digital image:

identifying the location in the first digital image (102) that corresponds to the location of said pixel in the second digital image; identifying the pixel in the first digital image (102) that corresponds to said location in the first digital image; and, filtering said pixel in the first digital image (102) with the respective single interpolation filter (202) that corresponds to said location in the first digital image (102), thereby to obtain the pixels in the second digital image (104).

22. Apparatus according to any of claims 12 to 21, comprising a look-up table containing the values of the elements of the feature vectors (Y).

**Patentansprüche**

1. Verfahren zum Ändern der räumlichen Auflösung eines ersten digitalen Bildes (102) mit einer ersten räumlichen Auflösung zum Bereitstellen eines zweiten digitalen Bildes (105) mit einer zweiten räumlichen Auflösung, die sich von der ersten räumlichen Auflösung unterscheidet, wobei das Verfahren für jeden Pixel eine Vielzahl von Pixeln in dem ersten digitalen Bild umfasst:

- Erhalten eines Merkmalsvektors (Y) für ein Pixel (101) in dem ersten digitalen Bild (102);
- Klassifizieren des Pixels (101), so dass das Pixel einer bzw. mehreren Kontextklassen zugeordnet wird, indem der Merkmalsvektor (Y) des Pixels mit einem Prototypen jeder Kontextklasse verglichen wird, wobei jede Kontextklasse einen bzw. mehrere damit verbundene Interpolationsfilter (202) aufweist; und
- Filtern des Pixels (101) durch Verwenden des einen Interpolationsfilters bzw. mehrerer Interpolationsfilter (202), der/die mit der einen Kontextklasse bzw. mit mehreren Kontextklassen, denen das Pixel zugeordnet ist, verbunden ist/sind, um **dadurch** ein bzw. mehrere Pixel (104) des zweiten digitalen Bildes (105) zu erzeugen;
- wobei der Merkmalsvektor (Y) für das Pixel (101) eine Funktion der Unterschiede zwischen ausgesuchten benachbarten Pixelpaaren in dem ersten digitalen Bild (102) ist, **dadurch gekennzeichnet, dass**
- zumindest ein benachbartes Pixelpaar in dem ersten digitalen Bild (102) das Pixel (101) nicht einschließt.

2. Verfahren nach Anspruch 1, wobei der Merkmalsvektor (Y) lediglich eine Funktion der Unterschiede zwischen ausgesuchten benachbarten Pixelpaaren in dem ersten digitalen Bild (102) ist, wobei zumindest eines der benachbarten Pixelpaare in dem ersten digitalen Bild (102) Pixel (101) nicht einschließt.

3. Verfahren nach Anspruch 1 oder Anspruch 2, wobei die Pixelpaare Pixel in einem das Pixel (101) umgebenden Fenster (103) von vorgegebener Größe sind.

4. Verfahren nach einem der Ansprüche 1 bis 3, wobei die Funktion derart lautet, dass die Unterschiede zwischen ausgesuchten benachbarten Pixelpaaren in dem ersten digitalen Bild (102) jeweils das n-fache betragen, wobei n eine gerade Zahl ist.

5. Verfahren nach einem der Ansprüche 1 bis 4, wobei jedes Element jedes Merkmalsvektors (Y) eine Funktion des Unterschieds zwischen einem ausgesuchten benachbarten Pixelpaar in dem ersten digitalen Bild (102) ist, wobei jeder Merkmalsvektor durch Relativieren der Elemente des **dadurch** erhaltenen Merkmalsvektors erhalten wird.

6. Verfahren nach einem der Ansprüche 1 bis 5, wobei zumindest ein Element jedes Merkmalsvektors (Y) eine Funktion der Unterschiede zwischen Pixelpaaren in benachbarten Reihen des ersten digitalen Bildes (102) ist.

7. Verfahren nach einem der Ansprüche 1 bis 6, wobei das erste digitale Bild (102) ein Format besitzt, das zumindest eine Luminanzkomponente und zwei Chrominanzkomponenten aufweist, wobei:

die Unterschiede zwischen zumindest einigen benachbarten Pixelpaaren den Unterschieden der betreffenden Werte der Luminanzkomponenten der benachbarten Pixelpaare entsprechen.

8. Verfahren nach Anspruch 7, wobei das erste digitale Bild (102) zunächst ein RGB-Format aufweist und in das Format mit zumindest einer Luminanzkomponente und zwei Chrominanzkomponenten umgewandelt wird, wobei jene Kombinationen der RGB-Komponenten aufgezeigt werden, bei denen isoluminante Ränder auftreten können, wenn das Bild in RGB-Format in das Format mit zumindest einer Luminanzkomponente und zwei Chrominanzkomponenten umgewandelt wird, wobei:

- zumindest bei einigen Pixeln in dem ersten digitalen Bild (102), die zunächst RGB-Werte aufweisen, die den Kombinationen von RGB-Komponenten entsprechen, bei denen isoluminante Ränder auftreten können, wenn das Bild in RGB-Format in das Format mit zumindest einer Luminanzkomponente und zwei Chrominanzkomponenten umgewandelt wird, die Unterschiede zwischen zumindest einigen benachbarten Pixelpaaren den Unterschieden in den betreffenden Werten zumindest einer der Chrominanzkomponenten der benachbarten Pixelpaare entsprechen.

9. Verfahren nach einem der Ansprüche 1 bis 8, wobei:

- das Klassifizieren des Pixels (101) derart erfolgt, dass das Pixel einzig einer Kontextklasse zugeordnet wird, indem der Merkmalsvektor (Y) des Pixels mit einem Prototypen jeder Kontextklasse verglichen wird; und
- das Filtern des Pixels (101) anhand eines einzigen Interpolationsfilters (202) erfolgt, der einzig mit der Kontextklasse verbunden ist, der das Pixel zugeordnet ist.

10. Verfahren nach Anspruch 9, wobei die zweite Auflösung größer ist als die erste Auflösung und das Verhältnis der ersten Auflösung zu der zweiten Auflösung keine ganze Zahl ist, wobei die Pixel (104) in dem zweiten digitalen Bild (105) für jedes Pixel in dem zweiten digitalen Bild (105) erhalten werden durch:

- Aufzeigen der Lage in dem ersten digitalen Bild in Entsprechung der Lage des Pixels in dem zweiten digitalen Bild (104);

- Aufzeigen des Pixels in dem ersten digitalen Bild (102) in Entsprechung der Lage in dem ersten digitalen Bild (102); und
- Filtern des Pixels in dem ersten digitalen Bild mit einem betreffenden einzigen Interpolationsfilter (202) in Entsprechung der Lage in dem ersten digitalen Bild (102), um **dadurch** die Pixel in dem zweiten digitalen Bild (104) zu erhalten.

11. Verfahren nach einem der Ansprüche 1 bis 10, wobei die Werte der Elemente eines Merkmalsvektor (Y) für das Pixel aus einer Nachschlagetabelle erhalten werden.

12. Vorrichtung zum Verändern der räumlichen Auslösung eines ersten digitalen Bildes (102) mit einer ersten räumlichen Auflösung zum Vorsehen eines zweiten digitalen Bildes (105) mit einer zweiten räumlichen Auflösung, die sich von der ersten räumlichen Auflösung unterscheidet, wobei die Vorrichtung umfasst:

- eine Einrichtung (200) zur Extraktion des Merkmalsvektors zum Erhalten eines Merkmalsvektors (Y) für ein Pixel (101) in dem ersten digitalen Bild (102);
- einen Klassifikator (201) zum Klassifizieren des Pixels (101), so dass das Pixel einer Kontextklasse bzw. mehreren Kontextklassen zugeordnet wird, indem der Merkmalsvektor (Y) des Pixels mit einem Prototypen jeder Kontextklasse verglichen wird, wobei jede Kontextklasse einen Interpolationsfilter bzw. mehrere damit verbundene Interpolationsfilter aufweist; und
- einen Filter (202) zum Filtern des Pixels anhand des einen Interpolationsfilters bzw. mehrerer Interpolationsfilter (202), der/die mit der einen bzw. mit mehreren Kontextklasse(n) verbunden ist/sind, der/denen das Pixel zugeordnet ist, um **dadurch** ein bzw. mehrere Pixel (104) des zweiten digitalen Bildes (105) zu erzeugen;
- wobei die Einrichtung (200) zur Extraktion des Merkmalsvektors so angeordnet ist, dass der Merkmalsvektor (Y) für das Pixel (101) eine Funktion der Unterschiede zwischen ausgesuchten benachbarten Pixelpaaren in dem ersten digitalen Bild (102) ist, **dadurch gekennzeichnet,**
- **dass** zumindest ein benachbartes Pixelpaar in dem ersten digitalen Bild (102) das Pixel (101) nicht einschließt.

13. Vorrichtung nach Anspruch 12, wobei die Einrichtung (200) zur Extraktion des Merkmalsvektors so angeordnet ist, dass der Merkmalsvektor (Y) lediglich eine Funktion der Unterschiede zwischen ausgesuchten benachbarten Pixelpaaren in dem ersten digitalen Bild (102) ist, wobei zumindest ein benachbartes Pixelpaar in dem ersten digitalen Bild Pixel (101) nicht einschließt.

14. Verfahren nach Anspruch 12 oder Anspruch 13, wobei die Einrichtung (200) zur Extraktion des Merkmalsvektors so angeordnet ist, dass die Pixelpaare Pixel in einem das Pixel umgebenden Fenster (103) von vorgegebener Größe sind.

15. Vorrichtung nach einem der Ansprüche 12 bis 14, wobei die Einrichtung (200) zur Extraktion des Merkmalsvektors so angeordnet ist, dass die Funktion derart lautet, dass die Unterschiede zwischen ausgesuchten benachbarten Pixelpaaren in dem ersten digitalen Bild (102) jeweils das n-fache betragen, wobei n eine gerade Zahl ist.

16. Vorrichtung nach einem der Ansprüche 12 bis 15, wobei die Einrichtung (200) zur Extraktion des Merkmalsvektors so angeordnet ist, dass jedes Element jedes Merkmalsvektors (Y) eine Funktion des Unterschieds zwischen einem ausgesuchten benachbarten Pixelpaar in dem ersten digitalen Bild (102) ist und jeder Merkmalsvektor (Y) durch Relativieren der Elemente des **dadurch** erhaltenen Merkmalsvektors erhalten wird.

17. Vorrichtung nach einem der Ansprüche 12 bis 16, wobei die Einrichtung (200) zur Extraktion des Merkmalsvektors so angeordnet ist, dass zumindest ein Element jedes Merkmalsvektors (Y) eine Funktion der Unterschiede zwischen Pixelpaaren in benachbarten Reihen des ersten digitalen Bildes (102) ist.

18. Vorrichtung nach einem der Ansprüche 12 bis 17, wobei die Vorrichtung angeordnet ist, um auf ein erstes digitales Bild (102) einzuwirken, das ein Format mit zumindest einer Luminanzkomponente und zwei Chrominanzkomponenten aufweist, wobei die Einrichtung (200) zur Extraktion des Merkmalsvektors so angeordnet ist, dass die Unterschiede zwischen zumindest einigen benachbarten Pixelpaaren den Unterschieden der betreffenden Werte der Luminanzkomponenten der benachbarten Pixelpaare entsprechen.

19. Vorrichtung nach Anspruch 18, wobei die Vorrichtung angeordnet ist, um auf ein erstes digitales Bild (102) einzuwirken, das zunächst ein RGB-Format aufweist und in das Format mit zumindest einer Luminanzkomponente und zwei Chrominanzkomponenten umgewandelt wird, wobei jene Kombinationen der RGB-Komponenten aufgezeigt werden, bei denen isoluminante Ränder auftreten können, wenn das Bild in RGB-Format in das Format mit zumindest einer Luminanzkomponente und zwei Chrominanzkomponenten umgewandelt wird, wobei:

- die Einrichtung (200) zur Extraktion des Merkmalsvektors so angeordnet ist, dass zumindest bei einigen Pixeln in dem ersten digitalen Bild (102), die zunächst RGB-Werte aufweisen, die den Kombinationen von RGB-Komponenten entsprechen, bei denen isoluminante Ränder auftreten können, wenn das Bild in RGB-Format in das Format mit zumindest einer Luminanzkomponente und zwei Chrominanzkomponenten umgewandelt wird, die Unterschiede zwischen zumindest einigen benachbarten Pixelpaaren den Unterschieden in den betreffenden Werten zumindest einer der Chrominanzkomponenten der benachbarten Pixelpaare entsprechen.

20. Vorrichtung nach einem der Ansprüche 12 bis 19, wobei:

- der Klassifikator (201) so angeordnet ist, dass das Pixel (101) einzig einer Kontextklasse zugeordnet wird, indem der Merkmalsvektor (Y) des Pixels (101) mit einem Prototypen jeder Kontextklasse verglichen wird; und
- der Filter (202) angeordnet ist, um das Pixel (101) anhand eines einzigen Interpolationsfilters (202), der mit der einzigen dem Pixel zugeordneten Kontextklasse verbunden ist, zu filtern.

21. Vorrichtung nach Anspruch 20, wobei die zweite Auflösung größer ist als die erste Auflösung und das Verhältnis der ersten Auflösung zu der zweiten Auflösung keine ganze Zahl ist, wobei die Vorrichtung angeordnet ist, um die Pixel in dem zweiten digitalen Bild (105) für jedes Pixel in dem zweiten digitalen Bild zu erhalten durch:

- Aufzeigen der Lage in dem ersten digitalen Bild (102) in Entsprechung der der Lage des Pixels in dem zweiten digitalen Bild;
- Aufzeigen des Pixels in dem ersten digitalen Bild (102) in Entsprechung der Lage in dem ersten digitalen Bild (102); und
- Filtern des Pixels in dem ersten digitalen Bild (102) mit einem betreffenden einzigen Interpolationsfilter (202) in Entsprechung der Lage in dem ersten digitalen Bild (102), um **dadurch** die Pixel in dem zweiten digitalen Bild (104) zu erhalten.

22. Vorrichtung nach einem der Ansprüche 12 bis 21, umfassend eine Nachschlagetabelle, die die Werte der Elemente des Merkmalsvektors (Y) enthält.

**Revendications**

1. Procédé de changement de la résolution spatiale d'une première image numérique (102) ayant une première résolution spatiale pour fournir une deuxième image numérique (105) ayant une deuxième résolution spatiale qui est différente de la première résolution spatiale, le procédé comprenant, pour chacun d'une pluralité de pixels dans la première image numérique :

une obtention d'un vecteur de caractéristique (Y) pour un pixel (101) dans la première image numérique (102) ;
une classification dudit pixel (101) de sorte que ledit pixel soit alloué à une ou plusieurs classes de contexte en comparant le vecteur de caractéristique (Y) dudit pixel à un prototype de chacune desdites classes de contexte, chacune desdites classes de contexte ayant un ou plusieurs filtres d'interpolation (202) qui lui sont associés ; et
un filtrage dudit pixel (101) en utilisant le ou les filtres d'interpolation (202) associés à la ou aux classes de contexte auxquelles ledit pixel est alloué, pour générer de ce fait un ou plusieurs pixels (104) de la deuxième image numérique (105) ;
dans lequel le vecteur de caractéristique (Y) pour ledit pixel (101) est une fonction de différences entre des paires adjacentes sélectionnées de pixels dans la première image numérique (102), **caractérisé en ce que**, au moins l'une desdites paires adjacentes de pixels dans la première image numérique (102) ne comprend pas ledit pixel (101).

2. Procédé selon la revendication 1, dans lequel le vecteur de caractéristique (Y) est une fonction uniquement de différences entre des paires adjacentes sélectionnées de pixels dans la première image numérique (102), au moins l'une des paires adjacentes de pixels dans la première image numérique (102) ne comprenant pas ledit pixel (101).

3. Procédé selon la revendication 1 ou 2, dans lequel lesdites paires de pixels sont des pixels dans une fenêtre (103) d'une taille prédéterminée autour dudit pixel (101).

4. Procédé selon l'une quelconque des revendications 1 à 3, dans lequel ladite fonction est telle que les différences entre des paires adjacentes sélectionnées de pixels dans la première image numérique (102) sont chacune élevées à une puissance n où n est un nombre entier.

5. Procédé selon l'une quelconque des revendications 1 à 4, dans lequel chaque élément de chaque vecteur de caractéristique (Y) est une fonction de la différence entre une paire adjacente sélectionnée de pixels dans la première image numérique (102), chaque vecteur de caractéristique étant obtenu en normalisant les éléments dudit vecteur de caractéristique ainsi obtenu.

6. Procédé selon l'une quelconque des revendications 1 à 5, dans lequel au moins l'un des éléments de chaque vecteur de caractéristique (Y) est une fonction de la différence entre des paires de pixels dans des rangées adjacentes de la première image numérique (102).

7. Procédé selon l'une quelconque des revendications 1 à 6, dans lequel la première image numérique (102) est dans un format qui a au moins une composante de luminance et deux composantes de chrominance, dans lequel :

lesdites différences entre au moins certaines des paires adjacentes de pixels sont les différences des valeurs respectives des composantes de luminance desdites paires adjacentes de pixels.

8. Procédé selon la revendication 7, dans lequel la première image numérique (102) est initialement au format RVB et est convertie en ledit format ayant au moins une composante de luminance et deux composantes de chrominance, dans lequel les combinaisons de composantes RVB pour lesquelles des bords isoluminants peuvent survenir lorsque l'image au format RVB est convertie au dit format ayant au moins une composante de luminance et deux composantes de chrominance sont identifiées, dans lequel :

pour au moins certains pixels dans la première image numérique (102) qui ont initialement des valeurs RVB correspondant aux combinaisons de composantes RVB pour lesquelles des bords isoluminants peuvent survenir lorsque l'image au format RVB est convertie en ledit format ayant au moins une composante de luminance et deux composantes de chrominance, lesdites différences entre au moins certaines des paires adjacentes desdits pixels sont les différences des valeurs respectives d'au moins une des composantes de chrominance desdites paires adjacentes de pixels.

9. Procédé selon l'une quelconque des revendications 1 à 8, dans lequel :

la classification dudit pixel (101) est telle que ledit pixel est alloué à une classe de contexte unique en comparant le vecteur de caractéristique (Y) dudit pixel à un prototype de chacune desdites classes de contexte ; et
le filtrage dudit pixel utilise un filtre d'interpolation unique (202) qui est associé à ladite classe de contexte unique à laquelle ledit pixel est alloué.

10. Procédé selon la revendication 9, dans lequel la deuxième résolution est supérieure à la première résolution et le rapport de la première résolution sur la deuxième résolution n'est pas un nombre entier, les pixels (104) dans la deuxième image numérique (105) étant obtenus par, pour chacun desdits pixels dans la deuxième image numérique (105) :

une identification de l'emplacement dans la première image numérique qui correspond à l'emplacement dudit pixel dans la deuxième image numérique (104) ;
une identification du pixel dans la première image numérique (102) qui correspond audit emplacement dans la première image numérique (102) ; et
un filtrage dudit pixel dans la première image numérique avec le filtre d'interpolation unique respectif (202) qui correspond audit emplacement dans la première image numérique (102), pour obtenir de ce fait les pixels dans la deuxième image numérique (104).

11. Procédé selon l'une quelconque des revendications 1 à 10, dans lequel les valeurs des éléments d'un vecteur de caractéristique (Y) pour ledit pixel sont obtenues à partir d'une table de recherche.

12. Appareil de changement de la résolution spatiale d'une première image numérique (102) ayant une première résolution spatiale pour fournir une deuxième image numérique (105) ayant une deuxième résolution spatiale qui est différente de la première résolution spatiale, l'appareil comprenant :

un extracteur de vecteur de caractéristique (200) pour obtenir un vecteur de caractéristique (Y) pour un pixel (101) dans la première image numérique (102) ;

un classificateur (201) pour classifier ledit pixel (101) de sorte que ledit pixel soit alloué à une ou plusieurs classes de contexte en comparant le vecteur de caractéristique (Y) dudit pixel à un prototype de chacune desdites classes de contexte, chacune desdites classes de contexte ayant un ou plusieurs filtres d'interpolation qui lui sont associés ; et

un filtre (202) pour filtrer ledit pixel en utilisant le ou les filtres d'interpolation (202) associés à la ou aux classes de contexte auxquelles ledit pixel est alloué, pour générer de ce fait un ou plusieurs pixels (104) de la deuxième image numérique (105) ;

dans lequel l'extracteur de vecteur de caractéristique (200) est agencé de sorte que ledit vecteur de caractéristique (Y) pour ledit pixel (101) est une fonction de différences entre des paires adjacentes sélectionnées de pixels dans la première image numérique (102), **caractérisé en ce que**,

au moins l'une desdites paires adjacentes de pixels dans la première image numérique (102) ne comprend pas ledit pixel (101).

13. Appareil selon la revendication 12, dans lequel l'extracteur de vecteur de caractéristique (200) est agencé de sorte que le vecteur de caractéristique (Y) est une fonction uniquement de différences entre des paires adjacentes sélectionnées de pixels dans la première image numérique (102), au moins l'une des paires adjacentes de pixels dans la première image numérique ne comprenant pas ledit pixel (101).

14. Appareil selon la revendication 12 ou la revendication 13, dans lequel l'extracteur de vecteur de caractéristique (200) est agencé de sorte que lesdites paires de pixels sont des pixels dans une fenêtre (103) d'une taille prédéterminée autour dudit pixel.

15. Appareil selon l'une quelconque des revendications 12 à 14, dans lequel l'extracteur de vecteur de caractéristique (200) est agencé de sorte que ladite fonction soit telle que les différences entre des paires adjacentes sélectionnées de pixels dans la première image numérique (102) soient chacune élevées à une puissance n où n est un nombre entier.

16. Appareil selon l'une quelconque des revendications 12 à 15, dans lequel l'extracteur de vecteur de caractéristique (200) est agencé de sorte que chaque élément de chaque vecteur de caractéristique (Y) est une fonction de la différence entre une paire adjacente sélectionnée de pixels dans la première image numérique (102) et chaque vecteur de caractéristique (Y) est obtenu en normalisant les éléments dudit vecteur de caractéristique ainsi obtenu.

17. Appareil selon l'une quelconque des revendications 12 à 16, dans lequel l'extracteur de vecteur de caractéristique (200) est agencé de sorte qu'au moins l'un des éléments de chaque vecteur de caractéristique (Y) est une fonction de la différence entre des paires de pixels dans des rangées adjacentes de la première image numérique (102).

18. Appareil selon l'une quelconque des revendications 12 à 17, dans lequel l'appareil est agencé pour fonctionner sur une première image numérique (102) qui est dans un format ayant au moins une composante de luminance et deux composantes de chrominance, l'extracteur de vecteur de caractéristique (200) étant agencé de sorte que lesdites différences entre au moins certaines des paires adjacentes de pixels sont les différences des valeurs respectives des composantes de luminance desdites paires adjacentes de pixels.

19. Appareil selon la revendication 18, dans lequel l'appareil est agencé pour fonctionner sur une première image numérique (102) qui est initialement au format RVB et est convertie en ledit format ayant au moins une composante de luminance et deux composantes de chrominance, dans lequel les combinaisons de composantes RVB pour lesquelles des bords isoluminants peuvent survenir lorsque l'image au format RVB est convertie en ledit format ayant au moins une composante de luminance et deux composantes de chrominance sont identifiées, dans lequel :

l'extracteur de vecteur de caractéristique (200) est agencé de sorte que pour au moins certains pixels dans la première image numérique (102) qui ont initialement des valeurs RVB correspondant aux combinaisons de composantes RVB pour lesquelles des bords isoluminants peuvent survenir lorsque l'image au format RVB est convertie en ledit format ayant au moins une composante de luminance et deux composantes de chrominance, lesdites différences entre au moins certaines des paires adjacentes desdits pixels sont les différences des valeurs respectives d'au moins une des composantes de chrominance desdites paires adjacentes de pixels.

20. Appareil selon l'une quelconque des revendications 12 à 19, dans lequel :

le classificateur (201) est agencé de sorte que ledit pixel (101) est alloué à une classe de contexte unique en comparant le vecteur de caractéristique (Y) dudit pixel (101) à un prototype de chacune desdites classes de contexte ; et
le filtre (202) est agencé pour filtrer ledit pixel (101) en utilisant un filtre d'interpolation unique qui est associé à ladite classe de contexte unique à laquelle ledit pixel est alloué.

21. Appareil selon la revendication 20, dans lequel la deuxième résolution est supérieure à la première résolution et le rapport de la première résolution sur la deuxième résolution n'est pas un nombre entier, l'appareil étant agencé pour obtenir les pixels dans la deuxième image numérique (105) par, pour chacun desdits pixels dans la deuxième image numérique :

une identification de l'emplacement dans la première image numérique (102) qui correspond à l'emplacement dudit pixel dans la deuxième image numérique ;
une identification du pixel dans la première image numérique (102) qui correspond audit emplacement dans la première image numérique ; et
un filtrage dudit pixel dans la première image numérique (102) avec le filtre d'interpolation unique respectif (202) qui correspond audit emplacement dans la première image numérique (102), pour obtenir de ce fait les pixels dans la deuxième image numérique (104).

22. Appareil selon l'une quelconque des revendications 12 à 21, comprenant une table de recherche contenant les valeurs des éléments des vecteurs de caractéristique (Y).

Figure 1

PRIOR ART

Figure 2

PRIOR ART

Figure 3

Figure 7

**Notation key**

| $z_1$ | $z_6$ | $z_{11}$ | $z_{16}$ | $z_{21}$ |
|---|---|---|---|---|
| $z_2$ | $z_7$ | $z_{12}$ | $z_{17}$ | $z_{22}$ |
| $z_3$ | $z_8$ | $z_{13}$ | $z_{18}$ | $z_{23}$ |
| $z_4$ | $z_9$ | $z_{14}$ | $z_{19}$ | $z_{24}$ |
| $z_5$ | $z_{10}$ | $z_{15}$ | $z_{20}$ | $z_{25}$ |

**$Y_1$**

| 0 | 0 | 0 | 0 | 0 |
|---|---|---|---|---|
| 0 | 1 | 0 | 0 | 0 |
| 0 | 0 | -1 | 0 | 0 |
| 0 | 0 | 0 | 0 | 0 |
| 0 | 0 | 0 | 0 | 0 |

**$Y_2$**

| 0 | 0 | 0 | 0 | 0 |
|---|---|---|---|---|
| 0 | 0 | 0 | 0 | 0 |
| 0 | 1 | -1 | 0 | 0 |
| 0 | 0 | 0 | 0 | 0 |
| 0 | 0 | 0 | 0 | 0 |

**$Y_3$**

| 0 | 0 | 0 | 0 | 0 |
|---|---|---|---|---|
| 0 | 0 | 0 | 0 | 0 |
| 0 | 0 | -1 | 0 | 0 |
| 0 | 1 | 0 | 0 | 0 |
| 0 | 0 | 0 | 0 | 0 |

**$Y_4$**

| 0 | 0 | 0 | 0 | 0 |
|---|---|---|---|---|
| 0 | 0 | 1 | 0 | 0 |
| 0 | 0 | -1 | 0 | 0 |
| 0 | 0 | 0 | 0 | 0 |
| 0 | 0 | 0 | 0 | 0 |

**$Y_5$**

| 0 | 0 | 0 | 0 | 0 |
|---|---|---|---|---|
| 0 | 0 | 0 | 0 | 0 |
| 0 | 0 | -1 | 0 | 0 |
| 0 | 0 | 1 | 0 | 0 |
| 0 | 0 | 0 | 0 | 0 |

**$Y_6$**

| 0 | 0 | 0 | 0 | 0 |
|---|---|---|---|---|
| 0 | 0 | 0 | 1 | 0 |
| 0 | 0 | -1 | 0 | 0 |
| 0 | 0 | 0 | 0 | 0 |
| 0 | 0 | 0 | 0 | 0 |

**$Y_7$**

| 0 | 0 | 0 | 0 | 0 |
|---|---|---|---|---|
| 0 | 0 | 0 | 0 | 0 |
| 0 | 0 | -1 | 1 | 0 |
| 0 | 0 | 0 | 0 | 0 |
| 0 | 0 | 0 | 0 | 0 |

**$Y_8$**

| 0 | 0 | 0 | 0 | 0 |
|---|---|---|---|---|
| 0 | 0 | 0 | 0 | 0 |
| 0 | 0 | -1 | 0 | 0 |
| 0 | 0 | 0 | 1 | 0 |
| 0 | 0 | 0 | 0 | 0 |

**$Y_9$**

| 1 | 0 | 0 | 0 | 0 |
|---|---|---|---|---|
| 0 | -1 | 0 | 0 | 0 |
| 0 | 0 | 0 | 0 | 0 |
| 0 | 0 | 0 | 0 | 0 |
| 0 | 0 | 0 | 0 | 0 |

**$Y_{10}$**

| 0 | -1 | 0 | 0 | 0 |
|---|---|---|---|---|
| 1 | 0 | 0 | 0 | 0 |
| 0 | 0 | 0 | 0 | 0 |
| 0 | 0 | 0 | 0 | 0 |
| 0 | 0 | 0 | 0 | 0 |

**$Y_{11}$**

| 0 | 0 | 0 | 0 | 1 |
|---|---|---|---|---|
| 0 | 0 | 0 | -1 | 0 |
| 0 | 0 | 0 | 0 | 0 |
| 0 | 0 | 0 | 0 | 0 |
| 0 | 0 | 0 | 0 | 0 |

**$Y_{12}$**

| 0 | 0 | 0 | 1 | 0 |
|---|---|---|---|---|
| 0 | 0 | 0 | 0 | -1 |
| 0 | 0 | 0 | 0 | 0 |
| 0 | 0 | 0 | 0 | 0 |
| 0 | 0 | 0 | 0 | 0 |

**$Y_{13}$**

| 0 | 0 | 0 | 0 | 0 |
|---|---|---|---|---|
| 0 | 0 | 0 | 0 | 0 |
| 0 | 0 | 0 | 0 | 0 |
| 0 | 0 | 0 | -1 | 0 |
| 0 | 0 | 0 | 0 | 1 |

**$Y_{14}$**

| 0 | 0 | 0 | 0 | 0 |
|---|---|---|---|---|
| 0 | 0 | 0 | 0 | 0 |
| 0 | 0 | 0 | 0 | 0 |
| 0 | 0 | 0 | 0 | 1 |
| 0 | 0 | 0 | -1 | 0 |

**$Y_{15}$**

| 0 | 0 | 0 | 0 | 0 |
|---|---|---|---|---|
| 0 | 0 | 0 | 0 | 0 |
| 0 | 0 | 0 | 0 | 0 |
| 0 | -1 | 0 | 0 | 0 |
| 1 | 0 | 0 | 0 | 0 |

**$Y_{16}$**

| 0 | 0 | 0 | 0 | 0 |
|---|---|---|---|---|
| 0 | 0 | 0 | 0 | 0 |
| 0 | 0 | 0 | 0 | 0 |
| -1 | 0 | 0 | 0 | 0 |
| 0 | 1 | 0 | 0 | 0 |

**$Y_{17}$**

| 0 | 0 | 0 | 0 | 0 |
|---|---|---|---|---|
| 0 | 0 | -1 | 0 | 0 |
| 0 | 1 | 0 | 0 | 0 |
| 0 | 0 | 0 | 0 | 0 |
| 0 | 0 | 0 | 0 | 0 |

**$Y_{18}$**

| 0 | 0 | 0 | 0 | 0 |
|---|---|---|---|---|
| 0 | 0 | 1 | 0 | 0 |
| 0 | 0 | 0 | -1 | 0 |
| 0 | 0 | 0 | 0 | 0 |
| 0 | 0 | 0 | 0 | 0 |

**$Y_{19}$**

| 0 | 0 | 0 | 0 | 0 |
|---|---|---|---|---|
| 0 | 0 | 0 | 0 | 0 |
| 0 | 0 | 0 | 1 | 0 |
| 0 | 0 | -1 | 0 | 0 |
| 0 | 0 | 0 | 0 | 0 |

**$Y_{20}$**

| 0 | 0 | 0 | 0 | 0 |
|---|---|---|---|---|
| 0 | 0 | 0 | 0 | 0 |
| 0 | -1 | 0 | 0 | 0 |
| 0 | 0 | 1 | 0 | 0 |
| 0 | 0 | 0 | 0 | 0 |

**$Y_{21}$**

| 1 | 2 | 4 | 2 | 1 |
|---|---|---|---|---|
| -1 | -2 | -4 | -2 | -1 |
| 0 | 0 | 0 | 0 | 0 |
| 0 | 0 | 0 | 0 | 0 |
| 0 | 0 | 0 | 0 | 0 |

**$Y_{22}$**

| 0 | 0 | 0 | 0 | 0 |
|---|---|---|---|---|
| 0 | 0 | 0 | 0 | 0 |
| 0 | 0 | 0 | 0 | 0 |
| 1 | 2 | 4 | 2 | 1 |
| -1 | -2 | -4 | -2 | -1 |

**$Y_{23}$**

| 0 | 0 | 0 | 0 | 0 |
|---|---|---|---|---|
| 1 | 2 | 4 | 2 | 1 |
| -1 | -2 | -4 | -2 | -1 |
| 0 | 0 | 0 | 0 | 0 |
| 0 | 0 | 0 | 0 | 0 |

**$Y_{24}$**

| 0 | 0 | 0 | 0 | 0 |
|---|---|---|---|---|
| 0 | 0 | 0 | 0 | 0 |
| 1 | 2 | 4 | 2 | 1 |
| -1 | -2 | -4 | -2 | -1 |
| 0 | 0 | 0 | 0 | 0 |

Figure 4

Top vertical

| 0 | 0 | 0 | 0 | 0 |
|---|---|---|---|---|
| 0 | 1/4 | 1/2 | 1/4 | 0 |
| 0 | 0 | -1 | 0 | 0 |
| 0 | 0 | 0 | 0 | 0 |
| 0 | 0 | 0 | 0 | 0 |

Right horizontal

| 0 | 0 | 0 | 0 | 0 |
|---|---|---|---|---|
| 0 | 0 | 0 | 1/4 | 0 |
| 0 | 0 | -1 | 1/2 | 0 |
| 0 | 0 | 0 | 1/4 | 0 |
| 0 | 0 | 0 | 0 | 0 |

Top-right diagonal

| 0 | 0 | 0 | 0 | 0 |
|---|---|---|---|---|
| 0 | 0 | 1/4 | 1/2 | 0 |
| 0 | 0 | -1 | 1/4 | 0 |
| 0 | 0 | 0 | 0 | 0 |
| 0 | 0 | 0 | 0 | 0 |

Figure 5

Example for non-integer scaling
Operating Scaling factor is 3.5

(150, 100)
HR Grid Indices

$$\frac{150}{3.5} = 42.\underline{85}$$

$$\frac{100}{3.5} = 28.\underline{57}$$

(42, 28)
LR Image
Indices

(42.85, 28.57)
Filter Grid Indices

(42, 28)

LR Image

(42.85, 28)

(42, 28)    (43, 28)

x axis

| F1 | F2 | F3 |
|----|----|----|
| F4 | F5 | F6 |
| F7 | F8 | F9 |

(42, 28.57)

(42, 29)    (43, 29)

y axis

Filter Grid

Figure 6

Low
resolution
input

400

~~Training~~ Training

500

Interpolation

High
resolution
output 105

Training
images

401

Cluster w.r.t
feature vectors

402

Interpolation filter
update

501

Any low
resolution
pixels left

No

Yes

502

Get the KxK low
resolution input

503

Arrange the input
as $K^2$x1 vector Z

504

Extract the feature
vector Y = f(Z)

505

Classify the input
pixel's context

506

Interpolate with
appropriate filter
x = AZ

Figure 8

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1814075 A
- WO 2007088113 A
- US 20070172152 A

**Non-patent literature cited in the description**

- **C.B. ATKINS ; C.A BOUMAN ; J.P. ALLEBACH.** Optimal Image Scaling Using Pixel Classification. *Proceedings of the 2001 International Conference on Image Processing,* 07 October 2001, vol. 3, 864-867

- **YOAKEIM, R. ; TAUBMAN, D.** Interpolation Specific Resolution Synthesis. *PROC. IEEE INT. CONF. ON IMAGE PROCESSING,* 2007, vol. 4, 201-204
- **AKGUN, T. ; ALTUNBASAK, Y.** A Coupled Feature-Filter Clustering Scheme for Resolution Synthesis. *PROC. IEEE INT. CONF. ON IMAGE PROCESSING,* 2007, vol. 5, 405-408